# EUROPEAN PATENT SPECIFICATION

(11) **EP 4 168 181 B1**
(45) Date of publication and mention of the grant of the patent: **17.04.2024**
(21) Application number: 21734108.0
(22) Date of filing: 17.06.2021
(51) Int. Cl.: B05B 7/24, B05B 7/04, B05B 7/10, B05B 14/40, B05B 15/555, B05B 16/60, B08B 3/00

(54) **APPARATUS FOR WASHING AIRBRUSHES HAVING LOW SMOKE EMISSION**
VORRICHTUNG ZUM WASCHEN VON AIRBRUSH-BÜRSTEN MIT NIEDRIGER RAUCHEMISSION
APPAREIL DE LAVAGE D'AÉROGRAPHES AYANT UNE FAIBLE ÉMISSION DE FUMÉE

(30) Priority: 19.06.2020 IT 202000014698
(43) Date of publication of application: 26.04.2023
(73) Proprietor: Rosauto S.r.l., 36054 Montebello Vicentino (Vicenza) (IT)
(72) Inventor: ROSA, Giuseppe, 36050 Montorso Vicentino (VI) (IT)
(74) Representative: Bettello, Pietro
(86) International application number: PCT/EP2021/066511
(87) International publication number: WO 2021/255207

(56) References cited:
- EP-A1- 1 602 412
- EP-A1- 3 195 943
- KR-A- 20140 008 828
- US-A- 5 107 876

## Description

The present invention relates to an apparatus for washing airbrushes, according to the general part of claim 1. KR2014 0008828A discloses an apparatus for washing airbrushes according to the prior art.

As is well known, when dirty airbrushes (also known as "spray guns") used for painting a car have to be cleaned in a body shop, apparatuses are used which allows this operation to be carried out automatically or manually which is necessary for the re-use of these devices, not least because paint residues are polluting products. The state of the art envisages two types of apparatuses for washing airbrushes: the first consists of mixed-cycle apparatuses, in which the airbrush and the parts thereof are pre-washed automatically in the initial step and washed and rinsed manually in the final step; the second consists of apparatuses in which all steps, pre-washing, final washing and rinsing, are carried out manually.

In the existing apparatuses for mixed-cycle washing, the airbrush is disassembled, and the components thereof are placed on a plane formed inside casing equipped with a tank for washing and with an openable hatch. A series of suitably oriented nozzles is arranged inside the washing tank, which take care of nebulizing the cleaning product and directing it onto the components of the airbrush to be washed. The cleaning product may be an environmentally friendly detergent, but more often it is a mixture of thinner or liquid solvents often containing toxic noxious and flammable chemical compounds, such as acetone and derivatives thereof. The detergent liquid is conveyed to the nozzles under pressure by means of special pneumatic pumps, usually diaphragm pumps, which suck the liquid from a tank located inside the casing below the washing tank. The nebulized liquid under pressure acts on the airbrush components deposited in the tank and then, by gravity, is deposited on the bottom of the tank from which, through a discharge conduit, it returns to the tank carrying the paint residues removed in the washing process. The cycle of suction, washing and return to the tank is repeated several times automatically, so that the washing product is used to clean a variable number of airbrushes, until the amount of paint residue contained in the liquid detergent is so high that it can no longer be used, and then the tank containing the spent liquid is replaced by a tank with uncontaminated liquid. This process, which involves reusing the liquid detergent several times, making it progressively less effective in the cleaning operations of the components of the airbrush used for painting, results consequently in some parts, such as the spray nozzle, through which the paint passes during the painting operation, to be particularly difficult to clean, so that at the end of the automatic washing operation these components are treated by manual washing, using a nozzle that is fed with non-polluted detergent liquid, taken from a second recipient also contained inside the casing of the apparatus. In the manual washing step, the nozzle used is not fed by a pneumatic pump, but it works according to the Venturi effect, for the obtention of which a considerable amount of compressed air is used to be able to generate the necessary depression to obtain a fine nebulization of the liquid detergent.

In the existing manual washing apparatuses, the airbrush is disassembled, and the components thereof are placed on a plane formed inside casing equipped with a washing tank. Inside this casing a brush is arranged with which the various components are cleaned using the same cleaning products that are used for washing in automatic apparatuses.

The liquid used for manual washing, after having been used on the airbrush components deposited in the tank, is deposited on the bottom of the tank from which, through a discharge conduit, it returns to the tank carrying the paint residues removed in the washing process. Also this process, which involves the reuse of the liquid detergent several times which therefore becomes progressively less effective in the cleaning operations of the components of the airbrush used for painting, requires a final washing operation to be carried out with unpolluted liquid detergent, taken from a second recipient also contained inside the casing of the apparatus and directed onto the component by means of a special nozzle, which takes care of nebulizing the cleaned liquid detergent according to the Venturi effect.

It is important to bear in mind that the process of final manual washing of the airbrushes carried out with the apparatuses currently available on the market uses a nozzle that works by means of the Venturi effect and has the disadvantage of developing, during the nebulization of the liquid detergent, composed of thinner or various solvents, a significant quantity of flammable gases, vapours or mists, which generate potentially explosive atmospheres and which, if inhaled by the operator, are particularly harmful to his respiratory system. For this reason, all the apparatuses for manual washing of the airbrushes, whether intended for installation in a protected outdoor environment in a ventilated area or for use inside the body shop, are equipped with a suction system installed inside a gas evacuation duct, generally located on the upper part of the casing, which is automatically activated when the hatch is opened, so as to prevent the spread of gases in the environment and protect the operator. The final part of the evacuation duct is connected to a chimney, which is prepared by the user in order to carry the gases and the vapours produced during washing into the atmosphere.

The suction is achieved by means of a nozzle arranged at the base of the duct which creates a depression with the Venturi effect and therefore uses a considerable amount of compressed air to operate correctly. In order to limit compressed air consumption, the suction is automatically activated by the machine only when the operator opens the access hatch with which the washing apparatuses are quipped and then remains in operation throughout the manual washing cycle, which usually lasts no less than 2-3 minutes.

It can therefore be understood that, due to the use of a nozzle that works using the Venturi effect, the amount of suctioned air that is conveyed into the atmosphere through the chimney during the final manual washing step is considerable and consequently brings with it a considerable amount of pollutants.

For all these reasons, the current apparatuses for washing airbrushes are polluting, unproductive and with a level of safety that is barely acceptable with current technology, because they consume a considerable amount of compressed air. It is important to bear in mind that acetone, one of the most effective cleaning components, is present in a predominant quantity in the mixture and is a very volatile compound, which means that it is rapidly consumed during the process, so the ability to carry out an effective washing rapidly deteriorates and forces the operator to frequently replenish the diluent reserve, in practice to replace the tank containing the liquid detergent with the paint residues removed from the washed airbrush components with a tank with uncontaminated detergent.

The state of the art also requires all operations to be carried out with the operator wearing rubber gloves to protect the hands from contact with the irritating substances that are present in the liquid detergent.

Some models built for washing pieces, but not suitable for washing airbrushes, do not require the operator to wear gloves, because a pair of holes is formed on the front part of the casing of the apparatus through which the operator introduces his hands into a pair of rubber gloves fixed on the inside wall of the apparatus at the passage holes.

However, this system has the disadvantage that it does not allow perfect manual dexterity, because rubber gloves, for obvious reasons of robustness, in order to be able to withstand the gases and the vapours produced by the detergent over time, are made of a material of such thickness that makes the glove rigid.

Within the context of the state of the art, there are apparatuses for washing airbrushes which, however, have a mode of operation and a structure which differs substantially from that of the present invention.

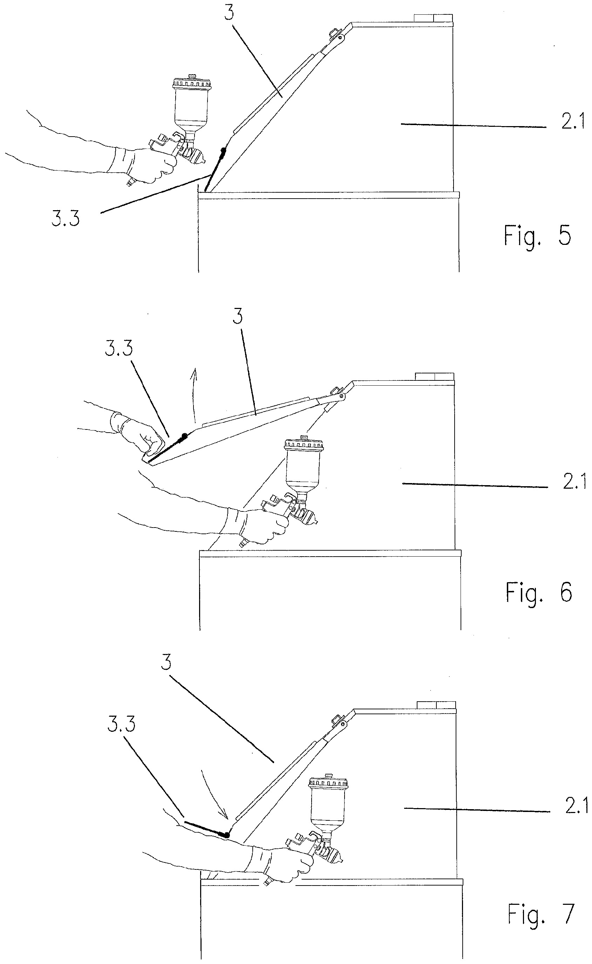

Three state-of-the-art documents are described in detail below:
1) US6647997 B2 on behalf of Mohn Merril K (US) dated 18 November 2003, under the title "Equipment for the washing of airbrushes and parts with low fume emission". This document (the references below relate to the above document) shows a device for cleaning articles equipped with a casing (12), internally divided into two parts, the upper space of which has a washing tank (32) arranged in it and the lower space (28) of which has a recipient (40) containing the liquid detergent contaminated by the paint residues removed by the washing of the elements constituting the airbrush and a recipient (38) containing the uncontaminated liquid detergent arranged in it, equipped with a vapour exhaust pipe (56), wherein a nozzle (implicitly shown at the end of line 54 in Fig. 5) takes care of creating the necessary depression using the Venturi effect.
   The structure of the present invention differs from this well-known apparatus in the configuration of the hatch, which is equipped with a window for inspection and, on the lower part of the hatch structure, with two slotted openings, with the lower edge devoid of material, so as to allow the introduction of the hands, part of the arms, the airbrush, the components thereof and any other small elements, in order to carry out the entire final manual washing step of the airbrush components with the main hatch closed. The hatch and the window thereof, which are interposed between the operator and the object to be cleaned, prevent dirty detergent from splashing onto the operator during the final manual washing step. In addition, the lower edges of the slotted openings, being devoid of material, allow the operator to maintain the position of the object to be cleaned in the upper space with one hand while the other hand can be used to lift or lower the hatch.
2) DE4310267 (A1) on behalf of Schereiber Walter Dipl. Ing. FH of 30/03/1993 under the title "Device for cleaning articles". This document (the references below relate to the above document) shows a device for cleaning articles equipped with a cabin (11), with a front wall (13) which is designed with a rotary hatch on which a window (22) and two gripping openings (13) equipped inside with rubber gloves are arranged. Underneath the cabin (11) there is a container (38) for cleaning the liquid. The liquid is conveyed at high pressure through a liquid pump (46) to a jet lance that can be handled inside the cabin. The liquid passes back into the container (38) through a screen insert (35). The air in the cabin is recirculated by means of a fan (27) in order to condense the humidity distributed in the internal air.
   On the other hand, the structure of the present invention provides on the openable hatch for two horseshoe-shaped openings without rubber gloves, which allow, after the introduction of the hand and the airbrush, the closing of a hatch without the need to open it completely. Moreover, suction is not made by means of a fan that remains switched on throughout the washing period, but by a Venturi effect device that is only activated when the hatch is opened. It is therefore clear that the detergent and air consumption of the invention is significantly lower than with this device.
3) EP1982775 (A1) on behalf of Rosauto Srl (IT) dated 07/03/2007 under the title "Combined intensive cleaning device for airbrushes and components thereof. This device (the references below relate to the above document) comprises a cabin (2) equipped with a front sealing hatch and designed to accommodate a washing area (4s) and a collection area (4i) within it. The collection area (4i) comprises a collection tank (21) which collects the already used washing liquid (22) and a bag filter (25) adapted to receive the already used washing liquid in order to separate the solid components thereof and transfer the filtered liquid (28) to a clean liquid container (27). The device is also equipped with a heating plate (40) fixed to the bottom of the collection tank (21), and suction means adapted to suck up the already used or cleaned liquid.

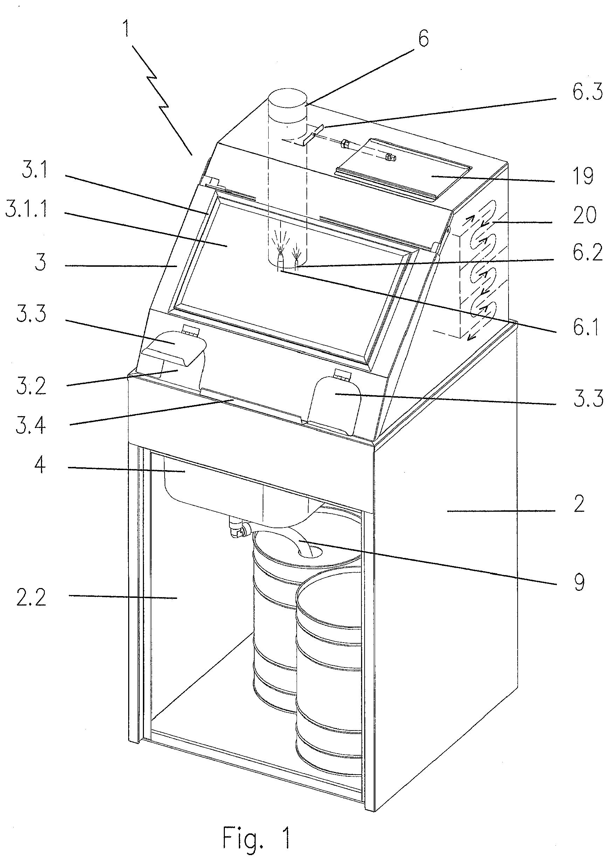

The most important state-of-the-art document, however, is KR20140008828A. This document (the numbers refer to the aforesaid one) illustrates an apparatus 1 for washing airbrushes having low smoke emission, to be used in auto body shops for washing and cleaning the airbrushes used for painting (see the abstract), which has a casing 110, internally divided into two parts, the upper space 112 of which has a washing tank 122 arranged in it and the lower space 113 of which a recipient 131 containing the liquid detergent contaminated by the paint residues removed by the washing of the elements constituting the airbrush and a recipient 135, 151 containing the uncontaminated liquid detergent arranged in it, said casing being equipped with a vapour exhaust pipe 170, wherein a nozzle 120 takes care of creating the necessary depression using the Venturi effect, wherein said apparatuses has, on the upper front part of the casing 110, a main openable hatch 116, equipped with a window (first functioning window 121), and on the lower part of the structure of said hatch 116, 121 two openings a slotted opening (see the lower opening in the window 116, 121, fig. 1, §43), with the lower edge devoid of material.

Other state-of-the-art documents are EP3195943A1, US5107876A and EP1602412A1.

The structure of the present invention, in a particular embodiment, provides on the openable hatch a transparent inspection window and two horseshoe-shaped openings without rubber gloves, which allow the simultaneous introduction of the hands and the airbrush to be cleaned, without the need to open the hatch completely. Manual washing is also carried out using a nebulizer equipped with a special nozzle, built in such a way as to form a chamber inside which, on the side facing to the outside, has a hole of greater size than the hole separating the chamber from the detergent feeding pipe, so as to minimise the misting effect of the liquid when it comes out of the nozzle itself. It is therefore understood that in this case the manual washing step is carried out differently and the consumption of detergent and air of the invention is significantly lower than with this device.

The object of the present invention is to realise an apparatus for washing airbrushes used in body shops for painting vehicles which is free from the disadvantages of similar products of a known type.

Specifically, the object of the invention is to realise an apparatus which, as well as effectively carrying out the steps of the automatic washing process, also associates the property of requiring in the final manual washing step a functional simplicity with a minimum consumption of compressed air and detergent liquid, thus obtaining a reduced level of pollution, notwithstanding a considerable operational safety due to its peculiar construction.

In particular, these objects are achieved by realising a washing apparatus according to the characterising part of claim 1 as well as claim 11.

The device according to the invention provides in the final manual washing step a simple and effective way of use by means of a construction of the casing and the application of elements substantially different from the current known type of apparatuses.

Operationally, when the washing apparatus is closed, it is similar to the known type apparatuses, but, unlike the aforesaid ones, it is equipped with a hatch that is openable in the upper front part of the casing on which a closed window is formed protected by a panel made of transparent material in order to allow inspection of the inside of the space and the correct performance of the manual washing operation. This operation is carried out with the main hatch closed using a pair of horseshoe-shaped slotted openings, with the bottom part free (devoid of material), each of these openings being formed in the lower parts of the main hatch and equipped with a gasket along its entire edge. Through these openings the operator can easily introduce the airbrush and even the bulkiest accessories into the space, by opening the main hatch by the amount needed to perform the operation and for a very short time, without opening the hatch completely. Each of the two slotted openings is equipped with a small hatch hinged on the structure of the main hatch above the slotted openings, which is raised automatically when the arm is introduced into the space and which closes automatically so as to completely cover the slotted opening when the hands are not present, thus achieving an almost perfect seal by means of the existing gasket on the contour of the slotted openings. Manual washing is therefore easily carried out by keeping the hatch closed with the suction device deactivated, because the operator can operate with his hands inside the space, having complete visibility inside through the window formed in the main hatch. In this way the main hatch is almost always closed, as the manual washing operation is carried out by the operator with his hands and part of his arms inside the space without the need to keep the main hatch open.

The apparatus for washing airbrushes referred to in the invention is also equipped inside the casing with a tank which is used for all the steps of the automatic washing process. The tank is in turn equipped with a closing hatch, which is used when the automatic washing step is carried out, in order to contain the gases and he vapours that develop during the nebulization of the detergent liquid. After the automatic washing step, the hatch of the washing tank is opened by the operator to carry out the manual washing and rinsing of the airbrush components deposited inside the washing tank. At the end of these last operations, the airbrush and the components thereof are extracted from the washing tank to be mounted and the tank hatch is closed before opening the main hatch, so that a considerable amount of the gases and the vapours remain trapped in the tank space, thus reducing the concentration of pollutants that must be released into the atmosphere.

A further advantage of the invention is that the final manual washing step is carried out with the brush using a special nozzle known as a "nebulizer", arranged in the upper space above the grated plate, from which the clean (non-contaminated) liquid detergent is introduced in the form of particles, passing through a diffuser. This "nebulizer" nozzle does not operate using the Venturi effect, as the liquid detergent passing through the nozzle and the diffuser is fed by a small pneumatic pump, which generates the pressure necessary for the correct nebulization of the liquid detergent and sucks the uncontaminated liquid detergent from a special drum present in the lower space of the apparatus. The "nebulizer" nozzle is built in such a way as to obtain that between the environment where the detergent is nebulized and the feeding duct there is a chamber equipped with two holes of different surfaces in the inlet and outlet sections, the one exiting the nozzle being larger than the one entering the chamber, thus creating a pressure difference which, combined with the small amount of compressed air coming from an independent duct, minimises the misting of the nebulized liquid inside the upper space. This system has the advantage of requiring a minimum amount of compressed air, as is necessary when using the Venturi effect, so the amount of compressed air used in the invention is particularly low.

It is well known that nozzles using the Venturi effect, with which current apparatuses for washing airbrushes are equipped, introduce a considerable amount of compressed air into the washing space during the manual washing step together with the liquid detergent. The compressed air injected into the space creates an imbalance between the air pressure inside the space and the surrounding pressure, so that the resulting overpressure inside the space where the manual washing operation takes place disperses a considerable amount of gases and vapours of flammable and toxic noxious substances into the environment. In addition, the presence of the suction, which is always in operation when the hatch is open, disperses into the atmosphere through the exhaust pipe an additional amount of gases and vapours containing toxic noxious substances in not inconsiderable amounts. Since the manual washing step in all known machines lasts about 2-3 minutes, the part of the gases and the vapours that disperses in the area around the washing apparatus when operating with the hatch open makes the environment in which the apparatus operates contaminated by a potentially explosive atmosphere due to the flammable gases and vapours diffused in the environment and therefore forces the user to take special measures to be able to work in the same environment with specific and expensive work apparatuses characterised by a certain degree of protection. The classic acrid smell that one breathes when using today's washing machines, when they are operating in the manual step, bears witness to the presence of these gases and vapours released by the liquid detergent.

It can therefore be understood the advantage of the apparatus referred to in the invention that allows to operate during the entire final manual washing and rinsing cycle with the main hatch closed and therefore with the suction deactivated, except for the time necessary to introduce the airbrush and the components thereof inside the apparatus and even at this step with the main hatch partially open. For this reason, the consumption of compressed air is kept to a minimum, so that even the amount of liquid detergent used in the final manual washing process is limited to the essentials, because less liquid detergent is needed to carry out the washing (low concentration of nebulized liquid).

Normal airbrushes used for applying enamel for painting vehicle bodywork are equipped with two mouths with threaded or quick-connect fittings, one of which is used to deliver the paint enamel to be applied to the device and the other for the compressed air necessary to achieve proper nebulization of the enamel. The amount of product sprayed onto the bodywork is regulated by a trigger control operated by the operator's hand.

In the apparatus referred to in the invention, the final manual washing of the airbrush is not performed by connecting the airbrush to the compressed air duct, but simply by placing it below the "nebulizer" nozzle of the clean liquid detergent and by operating the trigger of the airbrush stepwise, so that the clean liquid detergent crosses the internal channel and nozzle. The feeding of the "nebulizer" nozzle is ensured by a small pneumatic pump, which sends the detergent liquid under pressure to the nozzle, which nebulizes the product by means of a small amount of compressed air from a small tube connected to the nozzle fitting.

In this way, by operating with the main hatch closed and without the use of compressed air, the gases and the vapours that are released in the process of all the manual washing remain confined within the casing of the apparatus. After completing the final washing of the airbrush, the operator, still keeping the main hatch closed, stops with the special control inside the space the supply of liquid detergent to the "nebulizer" nozzle, extracts the airbrush and the components thereof from inside the washing tank and, after closing the hatch of the washing tank and the main hatch, takes care of assembling the airbrush components. In this way, the gases and the vapours produced by the final washing remain confined within the apparatus.

When the assembly operation of the airbrush is completed, the operator dries the outer surface of the airbrush using a suitable cloth.

It takes a few seconds to extract the airbrush from the inside of the space of the apparatus. In this way, the time in which the main hatch remains open, albeit partially, first during the step of introduction of the airbrush and the components thereof and then during the step of extraction of the airbrush, does not exceed about ten seconds compared to the time, as mentioned, of about 2-3 minutes of the current known type apparatuses.

In a first construction variant, designed to further reduce the amount of polluting gases and vapours, the washing apparatus can be equipped with an abatement system consisting of a quasi-hermetic container arranged inside in the upper part of the casing, shaped so that the gases and the vapours generated by the nebulizing process must pass through this device before being conveyed to the exhaust pipe of the apparatus. In particular, the gases and the vapours generated by the nebulization process are channelled into the open part of the container by the depression generated by the nozzle at the base of the exhaust pipe and pass through the abatement system, which consists of a set of labyrinth-shaped passages arranged in various ways, so that the gases and the vapours are forced to take a labyrinth path to reach the base of the exhaust pipe. On the labyrinth-shaped path towards the exhaust, the gases and the vapours pass through the fine meshes of a wire mesh mat, whereby the contact causes a decrease in the temperature of the vapours and the condensation of part of said vapours with a recovery of part of the liquid detergent. At the end of the path, the residual gases and vapours reach the base of the exhaust pipe where the nozzle is housed which generates the necessary depression to allow the pollutants to be expelled into the atmosphere through the chimney provided by the user. The part of the liquid detergent obtained from the condensation of the vapours falls on the lower wall of the upper space, from there into the washing tank and then by means of the exhaust pipe into the container of the polluted liquid detergent in which the paint residues removed from the airbrush components are mixed. If necessary, small metal cylinders can be used as an alternative to the fine wire mesh mat which have the same function of increasing the exchange surface for cooling the vapours and are arranged inside the abatement system space between the fins of the labyrinth duct.

A second construction variant has a different shape and arrangement of the slotted openings for the introduction of the hands into the space. This variant has a single opening which is formed in the main hatch at the lower edge and is equipped with a series of flexible gaskets, consisting of vertical bands of limited width, also fixed to the lower edge of the main hatch at the upper opening edge. This makes it easier to manipulate objects as the operator can also move his arms and not just his forearms like in the two-slot horseshoe-shaped version. The seal of the machine is guaranteed by the series of band-shaped gaskets that remain lowered when they are not affected by the presence of the arms. In this second construction variant there is also provided a hatch that is hinged on the front upper edge of the structure of the casing at the lower edges of the bands and which remains open when the operator has to carry out the final manual washing and is closed when the apparatus is at rest. The special feature of this construction variant is that it allows the introduction of the airbrush and the components thereof without lifting the main hatch, thanks to the size of the slotted opening equipped with band-shaped gaskets, which allows the passage of the arms while holding the airbrush, guaranteeing the correct seal during the final manual washing step, keeping the gases and the vapours produced by the liquid detergent confined inside the upper space.

The final manual washing can then be carried out easily by keeping the main hatch fully closed, with the suction deactivated, operating with the hands inside the upper space through the slot. The series of special band-shaped gaskets, arranged so as to cover the entire slot, guarantees a perfect seal of the upper space when the passage of the openings is not occupied by the arms.

A fourth construction variant, which can be combined with the third variant, has a manually operated closing hatch, applied by means of two hinges on the upper edge of the structure, which when opened causes, by means of an actuator controlled by it, the activation of an auxiliary suction device that generates a slight depression inside the upper space, so as to prevent the vapours from escaping into the surrounding environment during the final manual washing. Also in this variant, when the apparatus is not in use, the hatch is closed, thus ensuring that the residual vapours are sealed in the upper space inside the casing.

The invention also has a shutter which is installed on the vapour exhaust conduit and can be operated manually or equipped with an automatic control device which is activated when both hatches are closed, the main one equipped with a window and the second one which is arranged at the opening equipped with a band-shaped gasket. In this way, when the machine has both hatches closed, all gases and vapours contained within the upper casing of the apparatus remain confined inside the space, preventing external pollution.

A fifth construction variant has one or two slots located on one of the two side walls, at the discharge of the pneumatic valves arranged on each of the diaphragm pumps that allow the washing apparatus to operate. During the washing cycle, either manual or automatic, each pump draws the liquid detergent from the containers placed in the lower space of the casing and sends it to the upper space where it is nebulized for the washing operation of the airbrush components. After use, the liquid detergent is deposited at the bottom of the tank or grated plate and then by fall it returns into the container for the polluted product, also located in the lower space. This operation inevitably causes the emission of gas from the container to the lower space; in fact, in apparatuses like this one, where the pneumatic control valves of the diaphragm pumps have the air discharge mouth in communication with the inside of the space itself, due to the inevitable overpressure caused by the operation of each valve, a thrust is generated on the gases towards the outside through the spaces existing on the lower hatch of the casing. This construction variant, by placing the discharge mouths of the valves in direct communication with the outside of the washing apparatus, allows the air to be discharged to the outside without causing overpressure inside the lower space where the diaphragm pumps are arranged. In this way, the gases contained within the lower space do not tend to be expelled outside the washing apparatus.

A sixth construction variant has a closed window, protected by a panel made of transparent material, arranged on the upper part of the structure of the casing, in order to increase the visibility of the upper space during the final manual washing operations. If necessary, when the apparatus is placed in areas with no or poor lighting, the upper transparent closed window is used to illuminate the inside of the upper space by means of a special lamp placed above the apparatus. This lamp is automatically activated by lowering a movable lower hatch on the structure which acts on an actuator allowing the passage of a flow of compressed air which, by means of an air-electric transducer, activates a switch that powers the lamp.

In summary, the substantial difference of the washing apparatus referred to in the invention with respect to similar apparatuses of the known type consists mainly in carrying out almost the entire manual washing process with the hatch closed, using a "nebulizer" nozzle which is fed by a small pneumatic pump which allows to create sufficient pressure to obtain a correct nebulization of the detergent liquid.

Further advantages and characteristics of the invention will become clearer from the description of a possible embodiment thereof, given solely by way of non-limiting example, with the aid of the attached drawings, wherein:
- fig. 1 represents a perspective view from the front of the apparatus for washing airbrushes referred to in the invention, in a closed main hatch condition;
- fig. 2 represents a perspective view from the front of the apparatus for washing airbrushes referred to in the invention, in the condition of the main hatch open and the washing tank cover hatch closed;
- fig. 3 represents a perspective view from the front of the apparatus for washing airbrushes referred to in the invention, with the main and tank cover hatch open;
- fig. 4 represents an exploded view of the nebulizer nozzle present in the device referred to above;
- fig. 5 represents a side view of the device referred to in the invention, in which the main hatch and the hand holding the airbrush during the opening step of the main hatch before the airbrush is introduced into the upper space is visible, in which the closing hatch resting on the horseshoe-shaped slotted opening can also be seen;
- fig. 6 represents a side view of the device referred to in the invention, in which the main hatch is visible, held partially open by the left hand, with the right hand holding the airbrush in the initial step of introducing the airbrush into the upper space, in which the closing hatch is also visible, resting on the slotted opening;
- fig. 7 represents a side view of the device referred to in the invention, in which the main hatch resting on the arm is visible, with the right hand holding the airbrush in the final step of introducing the airbrush into the upper space, in which the closing hatch resting on the operator's arm is also visible;
- fig. 8 represents a perspective view of a construction variant of the device referred to in the invention, which envisages a single slotted opening arranged on the lower front part of the main hatch, equipped with a series of vertical rubber band-shaped gaskets for sealing the gases and the vapours produced in the washing process with a lower hatch for closing the slotted opening, with a second auxiliary nebulizer;
- fig. 9 represents a perspective view of the device referred to in the invention in its construction variant shown in Fig. 8, with the main hatch and the opening cover hatch with bands fully open.

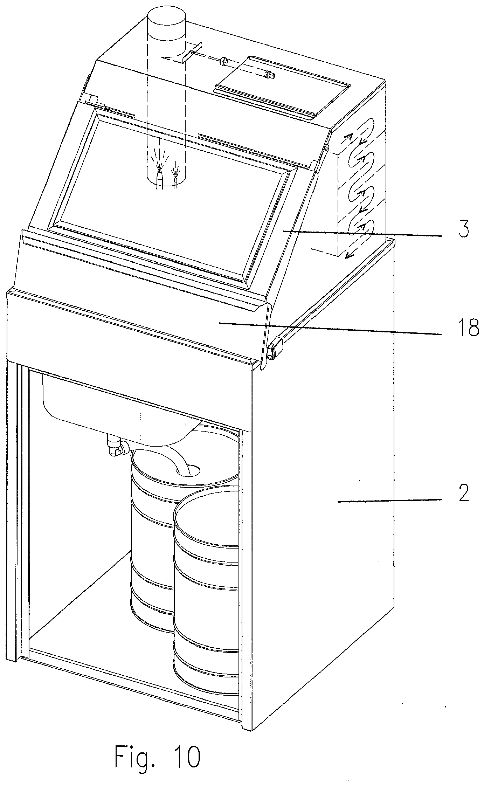

- fig. 10 represents a perspective view of the device referred to above in its construction variant shown in Figs. 8 and 9 with the main hatch and the lower hatch closed when the machine is not in operation;
- fig. 11 represents a perspective view of a construction variant of the device referred to in the invention, which provides a support on which a lamp is fixed which allows illumination of the inside of the machine by means of an upper window when the machine is operating.

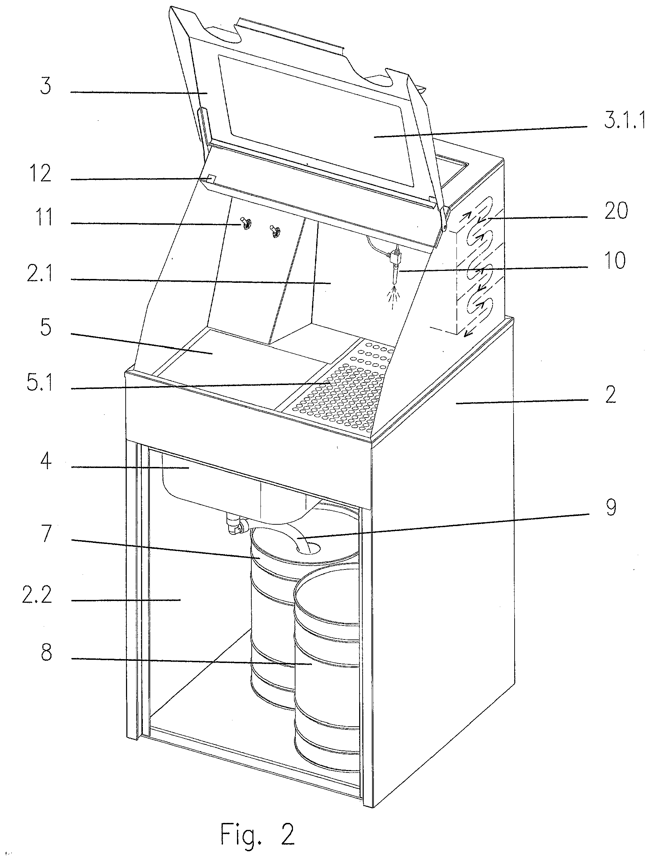

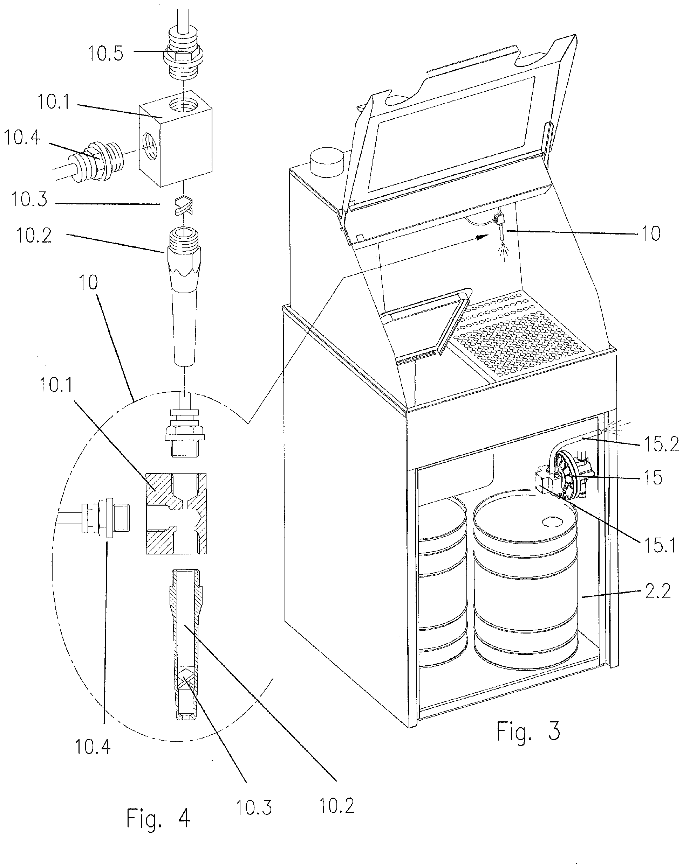

Figs. 1-3 show an apparatus for washing airbrushes according to the invention, indicated with reference 1, consisting of a casing 2, the internal volume of which is divided into two parts separated by an upper space 2.1, wherein the washing tank 4 is arranged, and by a lower space 2.2, wherein the recipients for the liquid detergent are arranged; the upper space 2.1 is equipped with a first main hatch 3, which allows the upper space 2.1 to be closed almost hermetically, while on the wall opposite to the first main hatch 3 there is arranged the vapour exhaust pipe 6, at the base of which the main nozzle 6.1 and the secondary nozzle 6.2 are arranged, which create the necessary depression by Venturi effect, in order to allow the discharge of the vapours into the atmosphere through a chimney provided by the user, which is connected to the upper end of the vapour exhaust pipe 6.

On the first main hatch 3 a closed window 3.1 is formed, protected by a panel 3.1.1 made of transparent material, while on the lower part of the structure of said first main hatch 3, in a lateral position, two horseshoe-shaped access openings or slots 3.2 are formed, devoid of the lower edge, for the purpose of allowing the introduction of the arms; said openings 3.2 are equipped with a gasket all along their contour and are closed by a pair of hatches 3.3, which are lowered by gravity when the operator's arms are not present and are raised by the arms when the operator introduces the airbrush and the components thereof inside the upper space 2.1 to deposit them in the washing tank 4; each of the hatches 3.3 remains resting on the upper part of the operator's arm, reducing to a minimum the surfaces from which the gases released by the washing process can expand into the environment. At the end of the whole manual washing process the operator opens the first hatch 3, using the handle 3.4, extracts the washed components of the airbrush in order to take care of the assembly of the airbrush.

Inside the casing 2, in the upper space 2.1 there is the washing tank 4 which is closed by the operator after depositing the airbrush components inside the tank by means of a second hatch 5. There is an exhaust opening on the lower part of the washing tank 4 which connects the washing tank 4 with the recyclable liquid detergent recipient 7 by means of a flexible pipe 9. Next to the second hatch 5 of the washing tank 4 there is a perforated plate 5.1 to allow the manual washing of the various components of the airbrush.

Inside the upper space 2.1, there is a "nebulizer" nozzle 10 used to carry out the final manual washing of the airbrush and the components thereof, which is activated by the operator by means of a control device 11, also located inside the upper space 2.1, which puts a pneumatic pump 15 in operation, which in turn sends the liquid under pressure to the nebulizer nozzle 10, which is composed of a first fitting 10.1 connected to a second fitting 10.5 of the detergent feeding tube and being equipped with a small hole on the detergent inlet mouth, on which an injector 10.2 is screwed at the bottom, which has a hole towards the outside of greater size with respect to the hole of inlet mouth of the detergent on the first fitting 10.1 and internally with a diffuser 10.3 and that takes care of injecting the liquid detergent, put under pressure by a small pneumatic pump 15, which is nebulized by means of compressed air that reaches the nozzle 10 by means of a feeding tube, on a third fitting 10.4 of which a small hole is made.

The lower space 2.2 of the casing 2 contains two recipients for the detergent liquid, namely one for the polluted recyclable detergent 7 and one for the non-polluted detergent 8, one or more pneumatic pumps 15 actuated by respective pneumatic valves 15.1, the air discharge of which is conveyed to outside by means of a small tube 15.2 and a slot made in the wall of the casing 2; a pneumatic pump 15 conveys the unpolluted detergent liquid to the "nebulizer" nozzle 10, which is used for the final manual washing step.

On the upper part of the structure of the casing 2 there is arranged the device 12 for the automatic activation of the suction of gases and vapours produced by the washing process when the first main hatch 3 is open. Again, on the upper part of the structure of the casing 2 there is arranged a closed window 19, protected by a panel made of transparent material in order to increase the internal visibility of the upper space 2.1 during the final manual washing operations.

On the rear wall of the casing 2 inside the upper space 2.1 in a position opposite to the first main hatch 3, there is a pipe for the evacuation of the gases and the vapours 6, at the base of which there is a nozzle 6.1, which creates with the Venturi effect the depression necessary to convey the gases and the vapours produced by the washing process towards the upper part of the duct, which is normally connected to the chimney that discharges the gases and the vapours into the atmosphere.

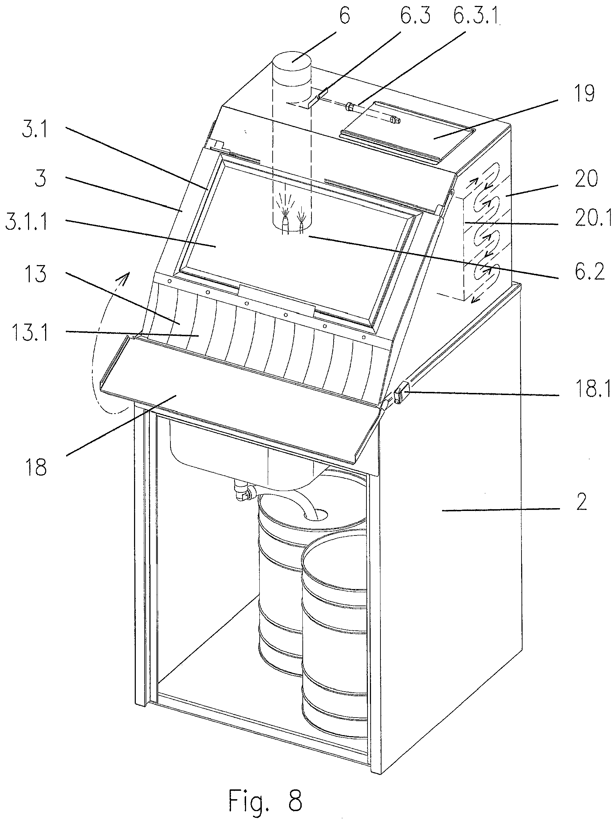

As can be seen in fig. 8, a construction variant provides that, before the gas and vapour evacuation pipe 6, inside the upper space 2.1, a vapour abatement system 20 is arranged, consisting of a container 20.1, made up of labyrinth-shaped metallic rows, which can be arranged in both vertical and horizontal positions.

Fig. 5 represents the positions of the first closed main hatch 3 and one of the small hatches 3.3 for closing the horseshoe-shaped openings 3.2, resting on the edge of the openings 3.2, immediately before the opening of the first main hatch 3 to introduce the airbrush inside the upper space 2.1.

Fig. 6 represents the positions of the first main hatch 3 slightly open and one of the small closing hatches 3.3 of the horseshoe-shaped openings 3.2 resting on the edge of the openings 3.2 during the step of introduction of the airbrush inside the upper space 2.1.

Fig. 7 represents the positions of the first closed main hatch 3 and one of the small closing hatches 3.3 of the horseshoe-shaped openings 3.2, resting on the operator's arm, at the end of the step of introducing the airbrush inside the upper space 2.1 before proceeding to disassemble the airbrush components.

Fig. 8 represents a perspective view of a construction variant which includes a first main hatch 3 equipped with a window 3.1 with a transparent panel for the inspection of the upper internal space 2.1, a single slotted opening 13 equipped with rubber gaskets made up of bands 13.1, formed on the lower front part of the first main hatch 3 and a third movable lower hatch 18 applied to the upper edge of the casing 2 by means of a pair of hinges and which, in the open position, acts on an actuator 18.1 which controls the intervention of the nozzle 6.2, in order to create at the base of the exhaust duct 6 a slight depression to prevent the vapours and gases developed during the final manual washing operation from coming out; on the exhaust chimney 6 there is also arranged a shutter 6.3, which can be manually operated or, if necessary, controlled by a pneumatic cylinder 6.3.1, which is operated by the actuator 18.1 controlled by the third lower hatch 18.

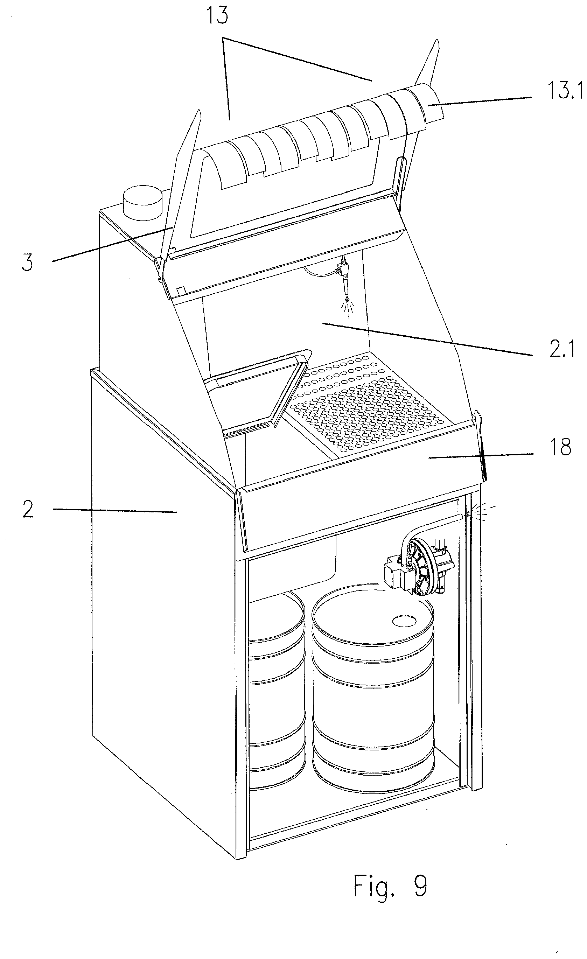

Fig. 9 represents a perspective view of the construction variant shown in Fig. 8, which provides for the first main hatch 3 to be equipped with a window 3.1 and with a single slotted opening 13, equipped with gaskets, advantageously made of rubber, made up of bands 13.1 in the position of the first main hatch 3 fully open.

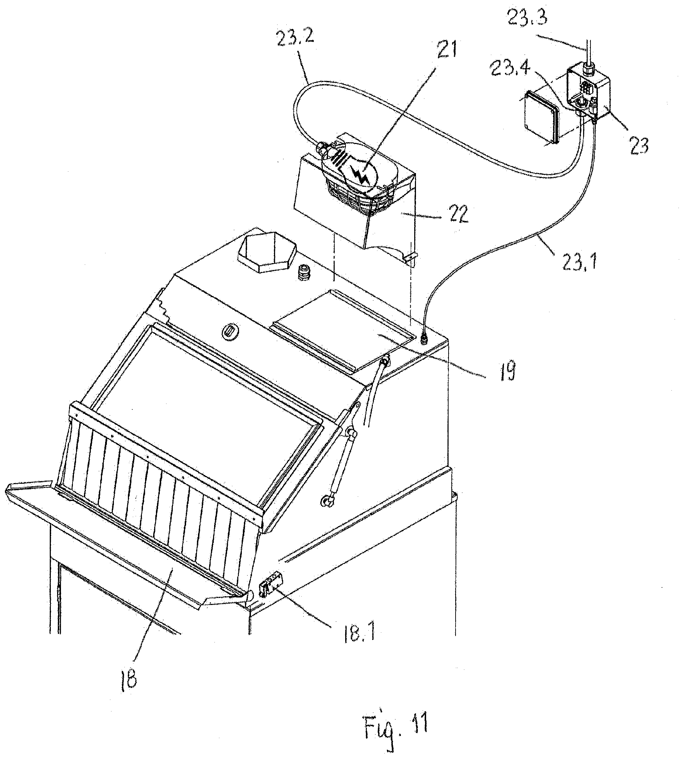

Fig. 11 represents a perspective view of a construction variant, which provides for an electric lamp or ceiling light 21, fixed inside a support 22, which is in turn fixed on the upper part of the structure of the machine at the upper window made of transparent material 19; the lamp or ceiling light is switched on automatically by means of an actuator 18.1, which is automatically activated when the lower hatch 18 is opened and which takes care of sending a flow of compressed air by means of the flexible pipe 23.1 to an air-electricity transducer 23.4, arranged inside a junction box 23, in which the power supply is also provided by means of a first conductor cable 23.3; the transducer 23.4 allows the passage of the electric current through a second conductor cable 23.2 which powers the lamp or ceiling light 21, arranged inside the support 22.

Operationally, as can be seen in the figures, with the construction solution referred to in the invention the process step is carried out in a different way and at different times than with the known type apparatuses. In particular, the solution allows the operator to carry out the entire final manual washing step with the first main hatch 3 closed, with the main suction deactivated, operating with hands with protective gloves to use the brush inside the washing tank 4, introducing the arms through the slotted openings 3.2, controlling the operation by means of the transparent panel 3.1.1 arranged on the window 3.1. In this way, all the final manual washing step is carried out with the first main hatch 3 closed, except for the time needed to introduce or remove the arms from inside the upper space 2.1.

The present invention is susceptible to changes and variations and its technical details may be replaced by other technically equivalent elements, and the materials and dimensions may be the most varied, depending on the requirements, provided that the whole is within the inventive concept defined by the following claims.

## Claims

1. APPARATUS FOR WASHING AIRBRUSHES HAVING LOW SMOKE EMISSION, to be used in auto body shops for washing and cleaning airbrushes used for painting, which has a casing (2), divided internally into two parts, an upper space (2.1) of which has a washing tank (4) arranged in it and a lower space (2.2) of which has a recipient (7) containing the liquid detergent contaminated by the paint residues removed by the washing of the elements constituting the airbrush and a recipient (8) containing the uncontaminated liquid detergent arranged in it, said casing being equipped with a vapour exhaust pipe (6), wherein a nozzle (6.1) takes care of creating the necessary depression using the Venturi effect, said apparatus providing for the presence, on the upper front part of the casing (2), of an openable main hatch (3), equipped with a window (3.1), and on the lower part of the structure of said hatch (3), of at least a slotted opening (3.2, 13), with the lower edge devoid of material,
said apparatus **being characterised in that** on the lower part of the main hatch (3) a single slotted opening (13) is formed, arranged for the introduction of the hands and arms of the operator, as well as of an airbrush and the components thereof, equipped with band-shaped gaskets (13.1), said slot being devoid of the lower edge thereof, said apparatus being equipped with a closing hatch (18), which is opened manually before introducing the hands inside the upper space (2.1) and which is closed after the manual washing step, the airbrush with its components being extracted from inside the upper space.

2. APPARATUS FOR WASHING AIRBRUSHES HAVING LOW SMOKE EMISSION, according to claim 1, **characterised in that** the window (3.1) is closed by a transparent panel (3.1.1).

3. APPARATUS FOR WASHING AIRBRUSHES HAVING LOW SMOKE EMISSION, according to claim 1 or 2, **characterised in that** the closing hatch (18) is equipped with an actuator device (18.1) that has means for intervening on the nozzle (6.2), in order to create a slight depression inside the space (2.1) during the final manual washing.

4. APPARATUS FOR WASHING AIRBRUSHES HAVING LOW SMOKE EMISSION, according to claim 3, **characterised in that** the actuator device (18.1), actuated by the closing hatch (18), has means that act on a pneumatic cylinder (6.3.1), the intervention of which causes the automatic closing of a shutter (6.3) arranged on the vapour exhaust pipe (6), in order to prevent the vapours developed during the final manual washing step from coming out from the exhaust pipe.

5. APPARATUS FOR WASHING AIRBRUSHES HAVING LOW SMOKE EMISSION, according to one or more of the previous claims, **characterised in that** the washing tank (4) is equipped with a closing hatch (5), able to be closed to carry out the automatic washing and able to be opened to carry out the extraction of the components deposited in the washing tank (4), before opening the main hatch (3) to extract the airbrush and the components thereof from inside the upper space (2.1), wherein a grated plane (5.1) is arranged on the horizontal plane beside the closing hatch (5) of the tank (4) to support the components of the airbrush during the final manual washing.

6. APPARATUS FOR WASHING AIRBRUSHES HAVING LOW SMOKE EMISSION, according to one or more of the previous claims, **characterised in that** inside the space (2.1) a nebulizing nozzle (10) is arranged, which is used during the step of the manual final washing cycle, said nebulizer being made up of a first fitting (10.1), connected to a second fitting (10.5) of the feeding tube of the detergent and being equipped on the inlet mouth of the detergent with a small hole, onto the bottom of which an injector (10.2) is screwed, which has a hole towards the outside of greater size with respect to the hole of the inlet mouth of the detergent on the first fitting (10.1) and internally with a diffuser (10.3) and that takes care of injecting the liquid detergent, put under pressure by a small pneumatic pump (15), which is nebulized by means of the compressed air that reaches the nozzle (10) by means of a feeding tube, on a third fitting (10.4) of compressed air of which a small hole is made.

7. APPARATUS FOR WASHING AIRBRUSHES HAVING LOW SMOKE EMISSION, according to claim 6, **characterised in that** inside the upper space (2.1) a control (11) for the operation of the small pneumatic pump (15) is arranged that feeds the nebulizing nozzle (10) arranged inside the upper space (2.1).

8. APPARATUS FOR WASHING AIRBRUSHES HAVING LOW SMOKE EMISSION, according to one or more of the previous claims, **characterised in that** inside the lower space (2.2), at the wall of the casing (2) where the pneumatic pumps are arranged, a small tube (15.2) is arranged, which allows the air of each pneumatic valve (15.1) for controlling the pump to be discharged to outside the apparatus by means of an opening suitably made on the side wall of the casing (2).

9. APPARATUS FOR WASHING AIRBRUSHES HAVING LOW SMOKE EMISSION, according to one or more of the previous claims, **characterised in that** on the upper part of the structure of the casing (2) a small window (19) is arranged, closed by a transparent panel, in order to increase the amount of light that illuminates the inside of the upper space (2.1).

10. APPARATUS FOR WASHING AIRBRUSHES HAVING LOW SMOKE EMISSION, according to one or more of the previous claims, **characterised in that** inside the space (2.1) a vapour abatement system (20) is arranged, consisting of a container (23.1), made up of labyrinth-shaped metallic rows, which is crossed by vapours, in order to lower the temperature thereof and promote the condensation thereof, connected at the end of the path to an exhaust pipe (6), inside which a nozzle (6.1) is arranged, operating through the Venturi effect to create the necessary depression to suck gases and vapours.

11. APPARATUS FOR WASHING AIRBRUSHES HAVING LOW SMOKE EMISSION, according to one or more of the previous claims, **characterised in that** there is a lamp or ceiling light (21), installed inside a support (22), fixed on the upper part of the structure of the casing (2) near a small window (19), closed by a transparent panel, adapted to be switched on automatically when the lower hatch (18) is lowered, thus activating an actuator device (18.1) which takes care, by means of a flexible pipe (23.1), of sending a flow of compressed air to an air-electricity transducer (23.4), arranged inside a casing (23), allowing the electric current coming from a power supply conductor (23.3) to reach the lamp or ceiling light (21) by means of a second conductor cable (23.2) which connects the lamp or ceiling light (21) to the casing (23).

12. APPARATUS FOR WASHING AIRBRUSHES HAVING LOW SMOKE EMISSION, to be used in auto body shops for washing and cleaning airbrushes used for painting, which has a casing (2), divided internally into two parts, an upper space (2.1) of which has a washing tank (4) arranged in it and a lower space (2.2) of which has a recipient (7) containing the liquid detergent contaminated by the paint residues removed by the washing of the elements constituting the airbrush and a recipient (8) containing the uncontaminated liquid detergent arranged in it, said casing being equipped with a vapour exhaust pipe (6), wherein a nozzle (6.1) takes care of creating the necessary depression using the Venturi effect, said apparatus providing for the presence, on the upper front part of the casing (2), of an openable main hatch (3), equipped with a window (3.1), and on the lower part of the structure of said hatch (3), of at least one slotted opening (3.2), with the lower edge devoid of material, said apparatus **being characterised in that** there are slotted openings (3.2), arranged on the lower part of the main hatch (3) for the introduction of the hands and the arms of the operator, as well as of an airbrush and its components, said openings are equipped with gaskets (3.5) along the edge thereof, are tunnel-shaped, devoid of the metallic part in the lower edge, each being equipped with a closing hatch (3.3), which lifts up when the main hatch (3) is closed if one of the hands of the operator has already been introduced inside the upper space (2.1) and that closes by gravity when the hand is withdrawn from the upper space.

## Patentansprüche

1. VORRICHTUNG ZUM WASCHEN VON AIRBRUSH MIT GERINGER RAUCHEMISSION, die in Karosseriewerkstätten zum Waschen und Reinigen von zum Lackieren verwendeten Airbrush verwendet wird, die ein Gehäuse (2), das innen in zwei Teile unterteilt ist, von denen ein oberer Raum (2.1) einen darin angeordneten Waschtank (4) aufweist und von denen ein unterer Raum (2.2) einen Behälter (7) aufweist, der das flüssige Reinigungsmittel enthält, das durch Farbreste kontaminiert wurde, die durch das Waschen der Elemente, die die Airbrush bilden, entfernt wurden, und einen Behälter (8) aufweist, der das unkontaminierte flüssige Reinigungsmittel enthält, das darin angeordnet ist, wobei das Gehäuse mit einem Dampfabzugsrohr (6) ausgestattet ist, wobei eine Düse (6.1) für die Erzeugung des erforderlichen Unterdrucks unter Ausnutzung des Venturi-Effekts sorgt, wobei die Vorrichtung am oberen vorderen Teil des Gehäuses (2) für das Vorhandensein von einer mit einem Fenster (3.1) versehenen Hauptklappe (3), die geöffnet werden kann, und am unteren Teil der Struktur dieser Klappe (3) von mindestens einer geschlitzten Öffnung (3.2, 13) sorgt, deren unterer Rand frei von Material ist,
wobei die Vorrichtung **dadurch gekennzeichnet ist, dass**
am unteren Teil der Hauptklappe (3) eine einzige geschlitzte Öffnung (13) ausgebildet ist, die zum Einführen der Hände und Arme des Bedieners sowie einer mit bandförmigen Dichtungen (13.1) ausgestatteten Airbrush und deren Komponenten angeordnet ist, wobei der Schlitz frei von seinem unteren Rand ist, wobei die Vorrichtung mit einer Schließklappe (18) ausgestattet ist, die manuell geöffnet wird, bevor die Hände in den oberen Raum (2.1) eingeführt werden, und die nach dem manuellen Waschschritt geschlossen wird, wobei die Airbrush mit ihren Komponenten aus dem Inneren des oberen Raums entnommen wird.

2. VORRICHTUNG ZUM WASCHEN VON AIRBRUSH MIT GERINGER RAUCHEMISSION nach Anspruch 1, **dadurch gekennzeichnet, dass** das Fenster (3.1) durch eine transparente Platte (3.1.1) verschlossen ist.

3. VORRICHTUNG ZUM WASCHEN VON AIRBRUSH MIT GERINGER RAUCHEMISSION nach Anspruch 1 oder 2, **dadurch gekennzeichnet, dass** die Schließklappe (18) mit einer Aktuatorvorrichtung (18.1) ausgestattet ist, die Mittel zum Eingriff an der Düse (6.2) aufweist, um beim abschließenden manuellen Waschen einen leichten Unterdruck innerhalb des Raumes (2.1) zu erzeugen.

4. VORRICHTUNG ZUM WASCHEN VON AIRBRUSH MIT GERINGER RAUCHEMISSION nach Anspruch 3, **dadurch gekennzeichnet, dass** die durch die Schließklappe (18) betätigte Aktuatorvorrichtung (18.1) Mittel aufweist, die auf einen Pneumatikzylinder (6.3.1) einwirken, dessen Eingriff das automatische Schließen eines am Dampfabzugsrohr (6) angeordneten Verschlusses (6.3) bewirkt, um zu verhindern, dass die beim abschließenden manuellen Waschschritt entstehenden Dämpfe aus dem Abzugsrohr austreten.

5. VORRICHTUNG ZUM WASCHEN VON AIRBRUSH MIT GERINGER RAUCHEMISSION nach einem oder mehreren der vorhergehenden Ansprüche, **dadurch gekennzeichnet, dass** der Waschtank (4) mit einer Schließklappe (5) ausgestattet ist, die geschlossen werden kann, um das automatische Waschen durchzuführen, und die geöffnet werden kann, um die Entnahme der im Waschtank (4) abgelagerten Komponenten durchzuführen, bevor die Hauptklappe (3) geöffnet wird, um die Airbrush und deren Komponenten aus dem Inneren des oberen Raums (2.1) zu entnehmen, wobei eine vergitterte Ebene (5.1) auf der horizontalen Ebene neben der Schließklappe (5) des Tanks (4) angeordnet ist, um die Komponenten der Airbrush beim abschließenden manuellen Waschen abzustützen.

6. VORRICHTUNG ZUM WASCHEN VON AIRBRUSH MIT GERINGER RAUCHEMISSION nach einem oder mehreren der vorhergehenden Ansprüche, **dadurch gekennzeichnet, dass** innerhalb des Raumes (2.1) eine Zerstäubungsdüse (10) angeordnet ist, die während des Schrittes des manuellen abschließenden Waschzyklus verwendet wird, wobei der Zerstäuber aus einem ersten Anschlussstück (10.1) besteht, das mit einem zweiten Anschlussstück (10.5) des Zufuhrrohrs des Reinigungsmittels verbunden ist und an der Einlassmündung des Reinigungsmittels mit einem kleinen Loch, auf dessen Boden ein Injektor (10.2) aufgeschraubt ist, der ein Loch nach außen aufweist, das in Bezug auf das Loch der Einlassmündung des Reinigungsmittels am ersten Anschlussstück (10.1) größer ist, und innen mit einem Diffusor (10.3) ausgestattet ist, und der dafür sorgt, dass das flüssige Reinigungsmittel, das von einer kleinen pneumatischen Pumpe (15) unter Druck gesetzt wird, das mittels der Druckluft zerstäubt wird, die die Düse (10) mittels eines Zufuhrrohrs erreicht, an einem dritten Anschlussstück (10.4) von Druckluft eingespritzt wird, von dem ein kleines Loch ausgebildet ist.

7. VORRICHTUNG ZUM WASCHEN VON AIRBRUSH MIT GERINGER RAUCHEMISSION nach Anspruch 6, **dadurch gekennzeichnet, dass** innerhalb des oberen Raumes (2.1) eine Steuerung (11) für den Betrieb der kleinen pneumatischen Pumpe (15) angeordnet ist, die die innerhalb des oberen Raumes (2.1) angeordnete Zerstäubungsdüse (10) versorgt.

8. VORRICHTUNG ZUM WASCHEN VON AIRBRUSH MIT GERINGER RAUCHEMISSION nach einem oder mehreren der vorhergehenden Ansprüche, **dadurch gekennzeichnet, dass** innerhalb des unteren Raums (2.2) an der Wand des Gehäuses (2), wo die pneumatischen Pumpen angeordnet sind, ein kleines Rohr (15.2) angeordnet ist, das es ermöglicht, dass die Luft jedes pneumatischen Ventils (15.1) zum Steuern der Pumpe mittels einer Öffnung, die an der Seitenwand des Gehäuses (2) in geeigneter Weise ausgebildet ist, nach außen der Vorrichtung abgegeben wird.

9. VORRICHTUNG ZUM WASCHEN VON AIRBRUSH MIT GERINGER RAUCHEMISSION nach einem oder mehreren der vorhergehenden Ansprüche, **dadurch gekennzeichnet, dass** am oberen Teil der Struktur des Gehäuses (2) ein kleines Fenster (19) angeordnet ist, das durch eine transparente Platte verschlossen ist, um die Lichtmenge, die das Innere des oberen Raums (2.1) beleuchtet, zu erhöhen.

10. VORRICHTUNG ZUM WASCHEN VON AIRBRUSH MIT GERINGER RAUCHEMISSION nach einem oder mehreren der vorhergehenden Ansprüche, **dadurch gekennzeichnet, dass** innerhalb des Raums (2.1) ein Dampfreduktionssystem (20) angeordnet ist, das aus einem Behälter (23.1) besteht, der aus labyrinthförmigen metallischen Reihen besteht, das von Dämpfen durchquert ist, um deren Temperatur zu senken und deren Kondensation zu fördern, das am Ende des Weges mit einem Abzugsrohr (6) verbunden ist, in dem eine Düse (6.1) angeordnet ist, die durch den Venturi-Effekt arbeitet, um den notwendigen Unterdruck zum Ansaugen von Gasen und Dämpfen zu erzeugen.

11. VORRICHTUNG ZUM WASCHEN VON AIRBRUSH MIT GERINGER RAUCHEMISSION nach einem oder mehreren der vorhergehenden Ansprüche, **dadurch gekennzeichnet, dass** eine Lampe oder Deckenleuchte (21) vorhanden ist, die innerhalb eines Trägers (22) installiert ist, der am oberen Teil der Struktur des Gehäuses (2) in der Nähe eines kleinen Fensters (19) befestigt ist, das durch eine transparente Platte verschlossen ist, die ausgelegt ist, um automatisch eingeschaltet zu werden, wenn die untere Klappe (18) abgesenkt wird, wodurch eine Aktuatorvorrichtung (18.1) aktiviert wird, die über ein flexibles Rohr (23.1) dafür sorgt, dass ein Druckluftstrom zu einem Luftstromwandler (23.4) geleitet wird, der in einem Gehäuse (23) angeordnet ist, so dass der von einem Stromversorgungsleiter (23.3) kommende elektrische Strom über ein zweites Leiterkabel (23.2), das die Lampe oder Deckenleuchte (21) mit dem Gehäuse (23) verbindet, zur Lampe oder Deckenleuchte (21) gelangen kann.

12. VORRICHTUNG ZUM WASCHEN VON AIRBRUSH MIT GERINGER RAUCHEMISSION, die in Karosseriewerkstätten zum Waschen und Reinigen von zum Lackieren verwendeten Airbrush verwendet wird, die ein Gehäuse (2), das innen in zwei Teile unterteilt ist, von denen ein oberer Raum (2.1) einen darin angeordneten Waschtank (4) aufweist und von denen ein unterer Raum (2.2) einen Behälter (7) aufweist, der das flüssige Reinigungsmittel enthält, das durch Farbreste kontaminiert wurde, die durch das Waschen der Elemente, die die Airbrush bilden, entfernt wurden, und einen Behälter (8) aufweist, der das unkontaminierte flüssige Reinigungsmittel enthält, das darin angeordnet ist, wobei das Gehäuse mit einem Dampfabzugsrohr (6) ausgestattet ist, wobei eine Düse (6.1) für die Erzeugung des erforderlichen Unterdrucks unter Ausnutzung des Venturi-Effekts sorgt, wobei die Vorrichtung am oberen vorderen Teil des Gehäuses (2) für das Vorhandensein von einer mit einem Fenster (3.1) versehenen Hauptklappe (3), die geöffnet werden kann, und am unteren Teil der Struktur dieser Klappe (3) von mindestens einer geschlitzten Öffnung (3.2) sorgt, deren unterer Rand frei von Material ist, wobei die Vorrichtung **dadurch gekennzeichnet ist, dass** geschlitzte Öffnungen (3.2) vorhanden sind, die am unteren Teil der Hauptklappe (3) zum Einführen der Hände und Arme des Bedieners sowie einer Airbrush und ihrer Komponenten angeordnet sind, die Öffnungen entlang ihres Randes mit Dichtungen (3.5) ausgestattet sind, tunnelförmig sind und keinen metallischen Teil im unteren Rand aufweisen, wobei jede mit einer Schließklappe (3.3) ausgestattet ist, die sich bei geschlossener Hauptklappe (3) abhebt, wenn eine der Hände des Bedieners bereits in den oberen Raum (2.1) eingeführt worden sind, und die sich durch Schwerkraft schließt, wenn die Hand aus dem oberen Raum zurückgezogen wird.

## Revendications

1. APPAREIL DE LAVAGE D'AÉROGRAPHES AYANT UNE FAIBLE ÉMISSION DE FUMÉE, destiné à être utilisé dans les ateliers de carrosserie automobile pour laver et nettoyer les aérographes utilisés pour la peinture, qui présente un boîtier (2), divisé intérieurement en deux parties, dont l'espace supérieur (2.1) a un réservoir de lavage (4) disposé dans celui-ci et dont l'espace inférieur (2.2) présente un récipient (7) contenant le détergent liquide contaminé par les résidus de peinture éliminés par le lavage des éléments constituant l'aérographe et un récipient (8) contenant le détergent liquide non contaminé y est disposé, ledit boîtier étant équipé d'un conduit d'évacuation des vapeurs (6), dans lequel une buse (6.1) se charge de créer la dépression nécessaire par effet Venturi, ledit appareil prévoyant la présence, sur la face supérieure partie du caisson (2), d'une trappe principale ouvrante (3), équipée d'une fenêtre (3.1), et sur la partie inférieure de la structure de ladite trappe (3), d'au moins une ouverture à fente (3.2, 13 ), avec le bord inférieur dépourvu de matière,
ledit appareil étant **caractérisé en ce que**
sur la partie inférieure de la trappe principale (3) est formée une unique ouverture fendue (13), agencée pour l'introduction des mains et des bras de l'opérateur, ainsi que d'un aérographe et de ses composants, équipé de joints (13.1), ladite fente étant dépourvue de son bord inférieur, ledit appareil étant équipé d'une trappe de fermeture (18), qui s'ouvre manuellement avant d'introduire les mains à l'intérieur de l'espace supérieur (2.1) et qui se ferme après le lavage manuel étape, l'aérographe avec ses composants étant extraits de l'intérieur de l'espace.

2. APPAREIL DE LAVAGE D'AÉROGRAPHES À FAIBLE ÉMISSION DE FUMÉE, selon la revendication 1, **caractérisé en ce que** la fenêtre (3.1) est fermée par un panneau transparent (3.1.1).

3. APPAREIL DE LAVAGE D'AÉROGRAPHES À FAIBLE ÉMISSION DE FUMÉES, selon la revendication 1 ou 2, **caractérisé en ce que** la trappe de fermeture (18) est équipée d'un dispositif actionneur (18.1) qui présente des moyens pour intervenir sur la buse (6.2), afin pour créer une légère dépression à l'intérieur de l'espace (2.1) lors du lavage manuel final.

4. APPAREIL DE LAVAGE D'AÉROGRAPHES À FAIBLE ÉMISSION DE FUMÉE, selon la revendication 3, **caractérisé en ce que** le dispositif actionneur (18.1), actionné par la trappe de fermeture (18), comporte des moyens agissant sur un vérin pneumatique (6.3.1), le dont l'intervention provoque la fermeture automatique d'un obturateur (6.3) disposé sur le conduit d'évacuation des vapeurs (6), afin d'éviter que les vapeurs développées lors de l'étape finale de lavage manuel ne sortent du conduit d'évacuation.

5. APPAREIL DE LAVAGE D'AÉROGRAPHES À FAIBLE ÉMISSION DE FUMÉE, selon une ou plusieurs des revendications précédentes, **caractérisé en ce que** la cuve de lavage (4) est équipée d'une trappe de fermeture (5), apte à être fermée pour effectuer le lavage automatique, et pouvant être ouvert pour effectuer l'extraction des composants déposés dans la cuve de lavage (4), avant d'ouvrir la trappe principale (3) pour extraire l'aérographe et ses composants de l'intérieur de l'espace supérieur (2.1), dans lequel un plan avec grille (5.1) est disposé sur le plan horizontal à côté de la trappe de fermeture (5) du réservoir (4) pour supporter les composants de l'aérographe lors du lavage manuel final.

6. APPAREIL DE LAVAGE D'AÉROGRAPHES À FAIBLE ÉMISSION DE FUMÉE, selon une ou plusieurs des revendications précédentes, **caractérisé en ce qu'**à l'intérieur de l'espace (2.1) est disposée une buse de nébulisation (10), qui est utilisée pendant l'étape de lavage final manuel, cycle, ledit nébuliseur étant constitué d'un premier raccord (10.1), relié à un deuxième raccord (10.5) du tube d'alimentation en détergent et étant équipé sur l'embouchure d'entrée du détergent d'un petit trou, au fond duquel est vissé un injecteur (10.2) qui présente un trou vers l'extérieur de plus grande taille par rapport au trou de l'embouchure d'entrée du détergent sur le premier raccord (10.1) et intérieurement avec un diffuseur (10.3) et qui s'occupe de injecter le détergent liquide, mis sous pression par une petite pompe pneumatique (15), qui est nébulisé au moyen de l'air comprimé arrivant à la buse (10) au moyen d'un tube d'alimentation, sur un troisième raccord (10.4) d'air comprimé dont un petit trou est fait.

7. APPAREIL DE LAVAGE D'AÉROGRAPHES À FAIBLE ÉMISSION DE FUMÉE, selon la revendication 6, **caractérisé en ce qu'**à l'intérieur de l'espace supérieur (2.1) est disposée une commande (11) pour le fonctionnement de la petite pompe pneumatique (15) qui alimente la buse de nébulisation ( 10) disposé à l'intérieur de l'espace supérieur (2.1).

8. APPAREIL DE LAVAGE D'AÉROGRAPHES À FAIBLE ÉMISSION DE FUMÉE, selon une ou plusieurs des revendications précédentes, **caractérisé en ce qu'**à l'intérieur de l'espace inférieur (2.2), au niveau de la paroi du boîtier (2) où sont disposées les pompes pneumatiques, un petit est disposé un tube (15.2) qui permet à l'air de chaque vanne pneumatique (15.1) de commande de la pompe d'être évacué vers l'extérieur de l'appareil au moyen d'une ouverture convenablement pratiquée sur la paroi latérale du boîtier (2).

9. APPAREIL DE LAVAGE D'AÉROGRAPHES À FAIBLE ÉMISSION DE FUMÉE, selon une ou plusieurs des revendications précédentes, **caractérisé en ce que** sur la partie supérieure de la structure du boîtier (2) est disposée une petite fenêtre (19), fermée par un panneau, afin d'augmenter la quantité de lumière qui éclaire l'intérieur de l'espace supérieur (2.1).

10. APPAREIL DE LAVAGE D'AÉROGRAPHES À FAIBLE ÉMISSION DE FUMÉE, selon une ou plusieurs des revendications précédentes, **caractérisé en ce qu'**à l'intérieur de l'espace (2.1) est disposé un système de réduction des vapeurs (20), constitué d'un récipient (23.1), constitué de rangées métalliques en forme de labyrinthe, traversées par des vapeurs, afin d'en abaisser la température et de favoriser leur condensation, reliées en fin de trajet à un tuyau d'échappement (6), à l'intérieur duquel est disposée une buse (6.1) , fonctionnant par effet Venturi pour créer la dépression nécessaire pour aspirer les gaz et les vapeurs.

11. APPAREIL POUR LAVAGE D'AÉROGRAPHES À FAIBLE ÉMISSION DE FUMÉE, selon une ou plusieurs des revendications précédentes, **caractérisé en ce qu'**il y a une lampe ou plafonnier (21), installée à l'intérieur d'un support (22), fixé sur la partie supérieure du structure du boîtier (2) à proximité d'une petite fenêtre (19), fermée par un panneau transparent, adaptée pour s'allumer automatiquement lorsque la trappe inférieure (18) est abaissée, activant ainsi un dispositif actionneur (18.1) qui prend soin, en des moyens d'une conduite flexible (23.1), pour envoyer un flux d'air comprimé vers un transducteur air-électricité (23.4), disposé à l'intérieur d'un boîtier (23), permettant au courant électrique provenant d'un conducteur d'alimentation (23.3) d'atteindre le lampe ou plafonnier (21) au moyen d'un deuxième câble conducteur (23.2) qui relie la lampe ou le plafonnier (21) au boîtier (23).

12. APPAREIL POUR LE LAVAGE D'AÉROGRAPHES À FAIBLE ÉMISSION DE FUMÉE, destiné à être utilisé dans les ateliers de carrosserie automobile pour laver et nettoyer les aérographes utilisés pour la peinture, qui présente un boîtier (2), divisé intérieurement en deux parties, dont l'espace supérieur (2.1) a un réservoir de lavage (4) disposé dans celui-ci et dont l'espace inférieur (2.2) présente un récipient (7) contenant le détergent liquide contaminé par les résidus de peinture éliminés par le lavage des éléments constituant l'aérographe et un récipient (8) contenant le détergent liquide non contaminé y est disposé, ledit boîtier étant équipé d'un conduit d'évacuation des vapeurs (6), dans lequel une buse (6.1) se charge de créer la dépression nécessaire par effet Venturi, ledit appareil prévoyant la présence, sur la face supérieure partie du caisson (2), d'une trappe principale ouvrant (3), équipée d'une fenêtre (3.1), et sur la partie inférieure de la structure de ladite trappe (3), d'au moins une ouverture à fente (3.2), avec le bord inférieur dépourvu de matériau, ledit appareil étant **caractérisé en ce qu'**il y a des ouvertures à fentes (3.2), disposées sur la partie inférieure de la trappe principale (3) pour l'introduction des mains et des bras de l'opérateur, ainsi comme pour un aérographe et ses composants, lesdites ouvertures sont éventuellement équipées de joints (3.5) le long de leur bord, sont en forme de tunnel, dépourvues de partie métallique dans le bord inférieur, chacune étant équipée d'une trappe de fermeture (3.3), qui se soulève lorsque la trappe principale (3) est fermée si une des mains de l'opérateur a déjà été introduite à l'intérieur de l'espace supérieur (2.1) et qui se ferme par gravité lorsque la main est retirée.
